(19)

**Europäisches Patentamt**

**European Patent Office**

**Office européen des brevets**

(11) **EP 4 481 635 A1**

(12) **EUROPEAN PATENT APPLICATION**

(43) Date of publication:
**25.12.2024 Bulletin 2024/52**

(21) Application number: **23305997.1**

(22) Date of filing: **22.06.2023**

(51) International Patent Classification (IPC):
***G06N 10/60*** *(2022.01)*

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **BULL SAS**
**78340 Les Clayes-Sous-Bois (FR)**

(72) Inventor: **OLIVA, Maxime**
**78340 LES CLAYES SOUS BOIS (FR)**

(74) Representative: **Plasseraud IP**
**104 Rue de Richelieu**
**CS92104**
**75080 Paris Cedex 02 (FR)**

(54) **METHOD FOR DETERMINING AN APPROXIMATED FINAL QUANTUM STATE SUCH THAT A FIDELITY OF THE APPROXIMATED FINAL QUANTUM STATE IS EQUAL TO OR GREATER THAN A LOWER BOUND**

(57)    Method for determining an approximated final state having a fidelity above a bound, comprising:
- receiving an initial state;
- receiving a quantum circuit comprising gates;
- defining a lower bound of the fidelity;
- iterating over the gates:
∘ applying a current gate to the initial state;
∘ if the current gate is a two-qubit gate, factorizing a portion of the updated state by SVD into a product of a unitary matrix, a diagonal matrix, and a unitary matrix;
• truncating the bond dimension of the diagonal matrix to a target bond dimension such that a product of a truncation fidelity of the truncated matrix, truncation fidelities of previously truncated matrices and future target truncation fidelities is greater than the bound;

∘ in a next iteration, using the updated state as initial state;

- defining an approximated final state equal to the updated state of a last iteration.

FIG. 2

EP 4 481 635 A1

## Description

The present disclosure generally relates to the field of approximation of quantum states, and, in particular, relates to a method for determining an approximated final quantum state in such a way that a fidelity between the approximated final quantum state and an exact final quantum state is greater than or equal to a lower bound.

## Summary

In many-body physics, approximated methods are employed for studying quantum systems and their temporal evolution. Such approximated methods often use tensor network-based models and thus reduce the overall complexity of exact methods based on exact quantum-mechanical models. Therefore, such approximated methods allow studying complex quantum systems and their evolution that are unreachable when using exact methods. For example, while exact methods are limited to systems of not more than around 40-45 qubits, tensor network-based methods can handle more complex systems with a much larger number of qubits.

In some tensor-network representations that represent quantum states in the form of matrix product states or matrix product operators, a maximum bond dimension is defined before carrying out the method. The bond dimensions of the quantum state grow during the execution of the method until they reach the maximum bond dimension, which is when truncations of the bond dimensions are initiated such that the bond dimensions do not exceed the maximum bond dimension.

The maximum bond dimension chosen is arbitrary, and there is no method for choosing one maximum bond dimension over another. Often a maximum bond dimension is chosen that either leads to too little approximations and thus to too long execution time of the method, or that leads to too much approximations and thus to an approximated final quantum state that is a poor and non-physical representation of the exact final quantum state that would have been obtained when using an exact method.

Thus, the interest in using approximated methods is limited since it is impossible to find out how much approximations should be made in order to reduce the execution time while at the same time obtaining a physical meaningful quantum state, i.e. a quantum state that contains meaningful physical information of the original exact quantum state.

Therefore, a need exists for providing a method that allows determining the amount of approximations to be made in order to reduce the execution time of the method and at the same time provide a physically meaningful approximated final quantum state.

## Summary

The present disclosure remedies the shortcomings of prior art.

It is disclosed a method for determining an approximated final quantum state in such a way that a fidelity between the approximated final quantum state and an exact final quantum state is greater than or equal to a lower bound, the method comprising:

- receiving an initial quantum state of a plurality of qubits, the initial quantum state being in a matrix product representation comprising a product of tensors;
- receiving a quantum circuit comprising quantum gates to be applied successively to the initial quantum state, wherein each quantum gate among the quantum gates is a single-qubit quantum gate or a two-qubit quantum gate;
- defining a lower bound of a fidelity between the approximated final quantum state and the exact final quantum state;
- iterating over the quantum gates of the quantum circuit in an intended order of application of the quantum gates to the initial quantum state, comprising:

  ○ applying a current quantum gate of the quantum gates of the quantum circuit to the initial quantum state to obtain an updated quantum state;
  ○ if the current quantum gate is a two-qubit quantum gate, factorizing a portion of the updated quantum state resulting from the application of the current quantum gate to the initial quantum state by singular value decomposition into a product of a complex unitary matrix, a diagonal matrix having a diagonal of non-negative real numbers, and an adjoint complex unitary matrix;

  • truncating a bond dimension of the diagonal matrix to a target bond dimension being determined in such a way that a product of:

    - a truncation fidelity of the diagonal matrix after truncation,

- truncation fidelities of truncated diagonal matrices of previous iterations, wherein each of said truncated diagonal matrices of previous iterations is obtained by truncating a diagonal matrix of a previous iteration obtained by singular value decomposition of a portion of an updated quantum state of a previous iteration resulting from the application of a two-qubit quantum gate of a previous iteration to an initial quantum state of a previous iteration, and
- target truncation fidelities defined for truncation of diagonal matrices in relation to two-qubit quantum gates among the quantum gates of the quantum circuit not yet applied to the initial quantum state,

is greater than or equal to said lower bound;

∘ in a next iteration, using the updated quantum state as the initial quantum state;

- defining an approximated final quantum state being equal to the updated quantum state of a last iteration.

Any type of quantum circuit can be transformed into a quantum circuit that comprises only single-qubit quantum gates and two-qubit quantum gates. Therefore, *"receiving a quantum circuit comprising quantum gates to be applied successively to the initial quantum state, wherein each quantum gate among the quantum gates is a single-qubit quantum gate or a two-qubit quantum gate"* may refer to the reception of a quantum circuit obtained by transformation of an untransformed quantum circuit comprising also quantum gates other than single-qubit quantum gates and two-qubit quantum gates.

The fidelity may be a measure of the closeness of two quantum states. Here, the fidelity may quantify how close an approximated final quantum state, i.e. a final quantum state obtained by approximated methods, is to an exact final quantum state, i.e. a quantum state that would have been obtained by exact methods.

For the case of a pure quantum state, the expression *"matrix product representation"* may mean that the pure quantum state is a matrix product state. For the case of a mixed quantum state, the expression *"matrix product representation"* may mean that the mixed quantum state is a matrix product operator or a matrix product state.

The current quantum gate may be the quantum gate of the quantum circuit that is applied in a given iteration to the initial quantum state.

Singular value decomposition may be a method for factorizing a real or complex matrix.

The portion of the updated quantum state resulting from the application of the quantum gate to the initial quantum state may then be factorized by singular value decomposition which generates a product of a complex unitary matrix, a rectangular diagonal matrix having a diagonal of non-negative real numbers, and an adjoint complex unitary matrix.

The initial quantum state, the updated quantum state, the exact final quantum state and the approximated final quantum state each describe a plurality of qubits. The bond dimension is defined between two tensors that are associated with qubits described by the quantum state. The bond dimension may be related to the maximum possible entanglement that a quantum state can encapsulate. When a two-qubit quantum gate is applied to a portion of the initial quantum state representative of said qubit pair, the bond dimension of the two tensors associated with this qubit pair may increase.

The diagonal matrix may be square-shaped. The bond dimension may correspond to the dimension of the diagonal matrix, i.e. to the number of rows/columns. The bond dimensions between neighbouring tensors in the quantum state in matrix product representation may increase individually after the applications of quantum gates. Whenever the predetermined threshold is reached, the bond dimension between said two neighbouring tensors may be truncated. Therefore, the updated quantum state may be truncated repeatedly while applying the quantum gates.

A constraint with respect to the execution of the method may be that the fidelity is minimized, i.e. that it is as close as possible to the lower bound.

It may not be possible to determine an exact value of the fidelity between the approximated final quantum state and the exact final quantum state. However, the approximations may be done in such a way that the fidelity is equal to or greater than the lower bound.

The truncation fidelity may be determined based on the diagonal matrix before truncation and on the diagonal matrix after truncation. More precisely, the truncation fidelity may be the fidelity between the updated quantum state having a diagonal matrix whose bond dimension is trunctated to a target bond dimension, and the updated quantum state without said truncation. The truncation fidelity may be a measure how close a given quantum state after truncation of the diagonal matrix is to the quantum state before truncation.

A target truncation fidelity may be defined for each two-qubit quantum gate. Thus, a target truncation fidelity may define truncation to be achieved for a diagonal matrix resulting from singular value decomposition of a portion of the updated quantum state resulting from the application of said quantum gate to the initial quantum state. Thus, after application of a quantum gate to the initial quantum state, the resulting updated quantum state may be truncated by a given amount or not, depending on the target truncation fidelity defined in relation to this quantum gate.

The target truncation fidelity may be defined before execution of the method. The target truncation fidelity may also be defined during execution of the method and updated dynamically during execution of the method. If no value is assigned to a target truncation fidelity in relation to a given quantum gate, a default value of 1 may be assigned to this target truncation fidelity, meaning that no truncation is to be made.

Different strategies may be pursued when determining the target truncating fidelities. For example, all target truncation fidelities may have the same value, such that all diagonal matrices may be truncated by a similar amount based on a predefined target truncation fidelity. In another example, relatively little or no truncation at all may be made in the first iterations and relatively strong truncation may be made at the in the last iterations. However, whatever strategy is pursued, the boundary condition to be respected may be that in each iteration the product of all truncation fidelities determined so far for quantum gates already applied to the initial quantum state and target truncation fidelities determined for quantum gates not yet applied to the initial quantum state may be equal to or greater to the lower bound.

Having applied all quantum gates of the quantum circuit to the initial quantum state, said product becomes a product of all truncation fidelities that have been determined during application of the quantum gates. The target truncation fidelities will not be present any more in the product since all quantum gates have been applied at this stage.

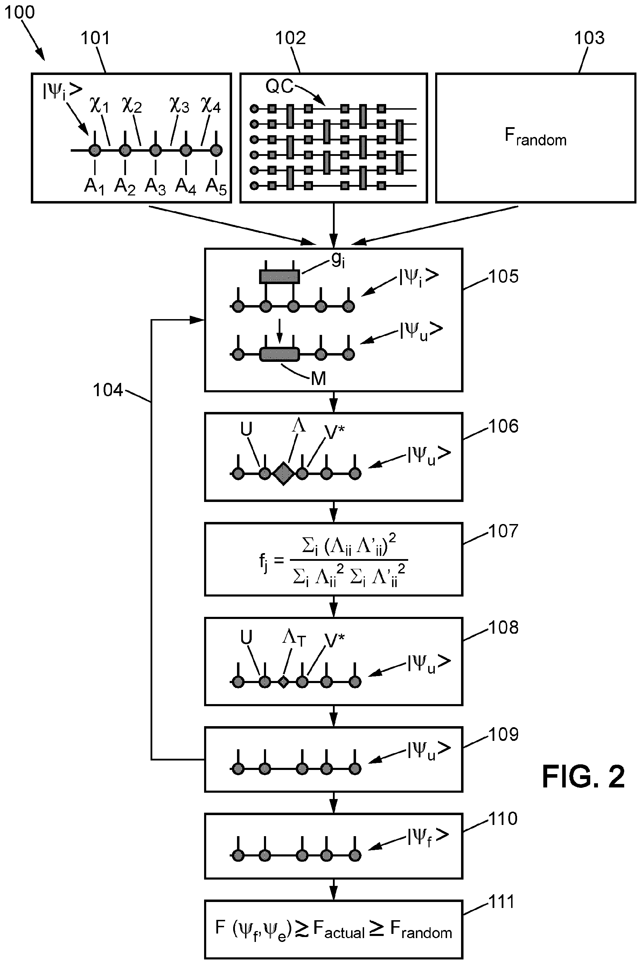

As will be explained in relation to figure 2, the product of all truncation fidelities determined throughout the execution of the method constitutes an actual lower bound of the fidelity between the approximated final quantum state and the exact final quantum state.

The iteration over the quantum gates can be considered as a for-loop. The for-loop may be executed N times, where N is the number of quantum gates in the quantum circuit. In the first iteration, a first quantum gate may be applied to the initial quantum state and an updated quantum state may be obtained. In the second iteration, the updated quantum state of the first iteration may be used as an initial quantum state, and a second quantum gate may be applied to the initial state. This process may be iterated until all quantum gate have been applied to the initial quantum state. In each iteration, the updated quantum state may be truncated.

The updated quantum state of the last operation may be defined as an approximated final quantum state.

Such truncations may be particularly adapted for lowly-entangled quantum states, and therefore for large systems which generate quantum states of limited entanglement, since the resulting error may be smaller than for strongly-entangled quantum states.

The proposed method aims to respond to the drawbacks mentioned above by determining an approximated final quantum state in such a way that a fidelity between the approximated final quantum state and an exact final quantum state is greater than or equal to a defined lower bound.

The method allows defining in advance how close the approximated final quantum state should be to the exact final quantum state, i.e. how well the physical features of the exact final quantum state should be represented in the approximated final quantum state. Thus, a good compromise between efficiency of the execution of the method and closeness of the approximated final quantum state to the exact final quantum state may be defined before execution of the method.

Thanks to said method, complex quantum systems that may not be accessible by exact methods can now be studied fast and efficiently while at the same time the reliability of the determined quantum state may be ensured. Thus, depending on the specific quantum system that is studied and on the later use of the approximated final quantum state, the proposed method allows choosing in advance the best compromise between efficiency and quality of the result obtained from the method.

In particular, applications that require iterative executions of a quantum circuit are now much less time consuming and much more energy efficient than such applications thay employ methods of prior art.

The method allows gaining information about real quantum systems that could so far not be studied and that may be difficult to be accessed by experiments.

Based on the approximated final quantum state and the lower bound, a real quantum system (such as a molecule) represented by the approximated final quantum state may be prepared and/or manipulated.

In an embodiment, truncating the diagonal matrix comprises canceling one or more diagonal elements of the diagonal matrix.

As a result, one or more rows and columns of the diagonal matrix will comprise only zeros and can therefore be canceled. Thus, the bond dimension and the complexity of the determined quantum state may be reduced.

In an embodiment, said one or more diagonal elements may be canceled in increasing order, starting from an element with a smallest value.

In the diagonal matrix generated by singular value decomposition, the diagonal elements are arranged in decreasing order, starting from the top left to the bottom right of the diagonal matrix. Thus, the diagonal elements may be canceled starting from the bottom right to the top left.

In an embodiment, the target bond dimension may be determined in such a way that

-    a truncation fidelity of the diagonal matrix truncated to said target bond dimension is equal to or greater than a target truncation fidelity defined for said diagonal matrix, and

- a number of diagonal elements canceled from the diagonal matrix when truncating the bond dimension of the diagonal matrix to the target bond dimension is maximized.

Thus, for a given target truncation fidelity, as many elements as possible of the diagonal matrix may be canceled, provided that the truncation fidelity of the truncated diagonal matrix is still equal to or larger than the target truncation fidelity. Thus, the objective may be to achieve a truncation fidelity equal to or greater than the target truncation fidelity and as close as possible to the target truncation fidelity.

In an embodiment, the target truncation fidelity may be defined as: $f_{tar} = F_{random}^{1/N_g}$, where $F_{random}$ may be the lower bound and where $N_g$ may be a number of two-qubit quantum gates of the quantum circuit.

Single-qubit gates do not create entanglement and do not increase the bond dimension. However, two-qubit quantum gates increase the bond dimension. Therefore, the number of two-qubit quantum gates acting may be determined, which will be equal to the number of iterations in which truncation may occur.

The target truncation fidelity may be determined in such a way that in each of these iterations an equal amount of truncation occurs. This means that in each iteration, the target truncation fidelity may be the same and the updated quantum state may be truncated by a similar amount. A diagonal matrix may be truncated as much as possible, provided that the resulting truncation fidelity is greater than or equal to the target truncation fidelity.

In an embodiment, the method may further comprise:

- in a first iteration, the target truncation fidelity is defined as: $f_{tar} = F_{random}^{1/N_g}$, where $F_{random}$ may be the lower bound and where $N_g$ may be a number of two-qubit quantum gates of the quantum circuit,
- in subsequent iterations, the target truncation fidelity may be updated depending on truncation fidelities of diagonal matrices of previous iterations, or kept constant.

The objective may be to achieve an actual fidelity between the approximated final quantum state and the exact final quantum state as close as possible to the lower bound.

Thus, if in a given iteration the truncation fidelity is higher than the target truncation fidelity, the truncation fidelity in the subsequent iterations may be chosen to be lower than initially determined. Therefore, in each iteration, the target truncation fidelity may be redetermined.

This allows achieving an actual fidelity as close as possible to the lower bound.

In an embodiment, if the initial quantum state and the approximated final quantum state may be a pure quantum states, the truncation fidelity may be defined as:

$$f_j = \frac{\sum_i \left(\Lambda_{ii} \Lambda'_{ii}\right)^2}{\sum_i \Lambda_{ii}^2 \sum_i \Lambda'^2_{ii}}$$

where $\Lambda_{ii}$ may be elements of the diagonal matrix before truncation and $\Lambda'_{ii}$ may be elements of the diagonal matrix after truncation.

In an embodiment, if the initial quantum state and the approximated final quantum state may be mixed quantum states, the truncation fidelity may be defined as:

$$f_j = \frac{\sum_i \Lambda_{ii} \Lambda'_{ii}}{\sqrt{\sum_i \Lambda_{ii}^2 \sum_i \Lambda'^2_{ii}}}$$

where $\Lambda_{ii}$ may be elements of the diagonal matrix before truncation and $\Lambda'_{ii}$ may be elements of the diagonal matrix after truncation.

Thus, the truncation fidelities and thus the lower bound of the fidelity can be determined based on the diagonal matrices before and after truncation, which may be considerably faster and more efficient than determining the fidelity via the exact final quantum state.

In an embodiment, the method may comprise:

- determining an actual lower bound of the fidelity between the approximated final quantum state and an exact final quantum state defined as a product of the truncation fidelities.

Having completed all iterations, the product of all truncation fidelities may be determined which constitutes an actual lower bound of the fidelity between the exact final quantum state and the approximated final quantum state. Thus, the fidelity between the approximated final quantum state and the exact final quantum state will be equal to or greater than the actual lower bound.

In an embodiment, having defined the approximated final quantum state and having determined the lower bound of the fidelity, the method may comprise:

- outputting the approximated final quantum state and the actual lower bound of the fidelity.

The approximated final quantum state and the lower bound of the fidelity may be displayed on a computer screen and serve for further analysis. For example, if a quantum system such as a molecule or an atom is investigated, further analysis may comprise the determination of energy states of the quantum system, based on the approximated final quantum state.

In addition, based on the output approximated final quantum state and the output lower bound, a real quantum system represented by the approximated final quantum state may be prepared and/or manipulated.

In an embodiment, having defined the approximated final quantum state and having determined the lower bound of the fidelity, the method may comprise:

- deciding based on the actual lower bound of the fidelity and on a predetermined criterion whether the approximated final quantum state may be a realistic approximation of the exact final quantum state.

The predetermined criterion may comprise determining whether the determined lower bound is below or above a predefined value. The predefined value may depend on the type of quantum system (e.g. an atom, a molecule) and on the type of quantum circuit that may be studied, for example on the number of quantum gates of the quantum circuit.

Based on the predetermined criterion, it may be decided whether the approximated final quantum state is a realistic approximation of the exact final quantum state, i.e. if it contains meaningful physical information of the exact final quantum state.

Based on said predetermined criterion, it may be decided whether the method should be carried out again with different amounts of truncation. Based on said criterion, it may be decided whether the approximated final state should be analyzed further, in order to extract properties about the investigated quantum system.

Based on the criterion, it may be decided whether a real quantum system represented by the approximated final quantum state may be prepared and/or manipulated.

Another aspect of the disclosure may be related to a non-transitory computer readable storage medium, having stored thereon a computer program comprising program instructions, the computer program being loadable into a data-processing unit and adapted to cause the data-processing unit to carry out a method according to any of the embodiments described above.

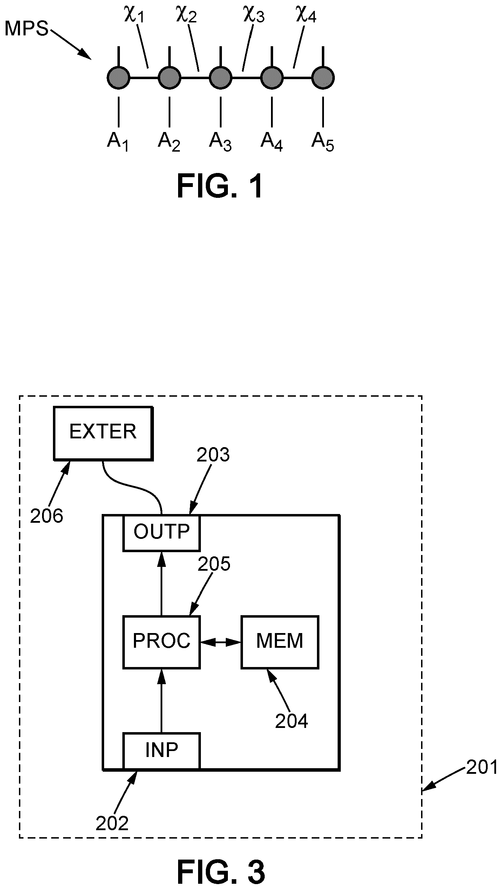

Figure 3 shows such a non-transitory computer readable storage medium.

Figure 2 can form the flowchart for the general algorithm of such a computer program.

## Brief Description of Drawings

Other features, details and advantages will be shown in the following detailed description and on the figures, on which:

**Fig. 1**
[Fig. 1] is a schematic representation of an example of a matrix product state used in the method of the present disclosure.

**Fig. 2**
[Fig. 2] is a view of a flowchart of an example of a method for determining an approximated final quantum state in such a way that a fidelity between the approximated final quantum state and an exact final quantum state is greater than or equal to a lower bound.

**Fig. 3**
[Fig. 3] shows a non-transitory computer readable storage medium configured to implement a method for determining an approximated final quantum state in such a way that a fidelity between the approximated final quantum state and an exact final quantum state is greater than or equal to a lower bound.

## Description of Embodiments

In the following, a method for determining an approximated final quantum state will be described. The approximated final quantum state is determined in such a way that a fidelity between the approximated final quantum state and an exact final quantum state is greater than or equal to a lower bound. The method may be implemented according to several embodiments.

When modeling quantum systems, the quantum state of qubits may be described either as a pure quantum state or as a mixed quantum state.

A pure quantum state describing a system of N qubits can be represented by a vector:

$$|\psi> = \sum_{\sigma_1 ... \sigma_N} C_{\sigma_1 ... \sigma_N} |\sigma_1> \otimes ... \otimes |\sigma_N>$$

Here, the $\{|\sigma_i>\}$ form an orthonormal basis, and $C_{\sigma_1 ... \sigma_N}$ is a complex valued tensor containing $2^N$ complex elements.

A mixed quantum state is a statistical ensemble of pure quantum states. A mixed quantum state describing a system of N qubits can be represented as:

$$\rho = \sum_{\sigma_1 ... \sigma_N} C_{\sigma_1 \sigma'_1 ... \sigma_N \sigma'_N} |\sigma_1> <\sigma'_1| \otimes ... \otimes |\sigma_N> <\sigma'_N|$$

Here, the $\{|\sigma_i> <\sigma'_i|\}$ form an orthonormal basis, and $C_{\sigma_1 \sigma'_1 ... \sigma'_N}$ is a complex valued tensor.

Both pure and mixed quantum states can be written in a matrix product representation.

As demonstrated by Guifre Vidal, "Efficient classical simulation of slightly entangled quantum computations", Phys. Rev. Lett. 91, 147902, 2003, a pure quantum state $|\psi>$ as described above can be written as a matrix product state:

$$|\psi> = \sum_{\sigma_1 ... \sigma_N ; \chi_1 ... \chi_{N-1}} A_{1,\chi_1}^{[1]\sigma_1} A_{\chi_1,\chi_2}^{[2]\sigma_2} ... A_{\chi_{N-1},1}^{[N]\sigma_N} |\sigma_1> \otimes ... \otimes |\sigma_N>$$

where $A_{1,\chi_1}^{[1]\sigma_1} ... A_{\chi_{N-1},1}^{[N]\sigma_N}$ are complex valued tensors of dimension 3, separated by bond dimension $\chi_1, ... \chi_{N-1}$, respectively. The coupling between two tensors representing a pair of qubits may be described by a respective bond dimension $\chi_1, ... \chi_{N-1}$.

The more the bond dimensions increase within the quantum state in matrix product representation, the more this quantum state will be able to represent entangled quantum states.

As it is know from Kyungjoo Noh et al., "Efficient classical simulation of noisy random quantum circuits in one dimension", Quantum 4, 318, 2020, a mixed quantum state $\rho$ written as a matrix product state in vectorized representation has the following form:

$$|\rho> = \sum_{\chi_1 ... \chi_{N-1}} A_{1,\chi_1}^{[1]\sigma_1} ... A_{\chi_T,\chi_{T+1}}^{[T]\sigma_T} A_{\chi_{T+1},\chi_{T+2}}^{[T+1]\sigma_{T+1}} ... A_{\chi_{N-1},1}^{[N]\sigma_N} |\Sigma_1> \otimes ... \otimes |\Sigma_N>$$

Here, $\Sigma_i = \sigma_i \times \sigma'_i$ and $|\Sigma_i> = |\sigma_i> |\sigma_i>$, with $I = 1...N$.

An example of a schematic representation of a matrix product state MPS is shown in figure 1. In this example, the matrix product state MPS describes the quantum state of five qubits $\sigma_1, \sigma_2, \sigma_3, \sigma_4, \sigma_5$, wherein the matrix product state can be represented as a product of the tensors $A_{1,\chi_1}^{[1]\sigma_1}, A_{2,\chi_2}^{[2]\sigma_2}, A_{3,\chi_3}^{[3]\sigma_3}, A_{4,\chi_4}^{[4]\sigma_4}, A_{5,\chi_5}^{[5]\sigma_5}$, referred to as $A_1, A_2, A_3, A_4, A_5$ for simplicity.

Each of the five circles in figure 1 are representative of the tensors $A_{\chi_k,\chi_{k+1}}^{[k]\sigma_k}$ associated with the quantum state qubits $\sigma_k$. $\chi_k$ and $\chi_{k+1}$ are the bond dimensions between the tensor on the left and the tensor on the right of $A^{[k]}$ respectively.

An initial quantum state in the form of a matrix product state MPS may be transformed by applying quantum gates to it. When applying the quantum gates to the initial quantum state, entanglement may created between qubits described by the quantum state. Each bond dimension $\chi_1, \chi_2, \chi_3, \chi_4$ may grow exponentially with the number N of qubits $\sigma_1, \sigma_2, \sigma_3, \sigma_4, \sigma_5$: $O(e^N)$. Therefore, the complexity of the term $A_{1,\chi_1}^{[1]\sigma_1} A_{\chi_1,\chi_2}^{[2]\sigma_2} ... A_{\chi_{N-1},1}^{[N]\sigma_N}$ and thus the complexity of the corresponding matrix product state MPS may grow exponentially as well.

In order to reduce the complexity of such methods, the updated quantum state resulting from the application of a quantum gate to the initial quantum state may be truncated.

For example, by truncating any $\chi_i$ of $\chi_1, \ldots \chi_{N-1}$ such that $\chi_i$ does not exceed a predetermined threshold $\chi_{max}$, each of the $\chi_i$-values may be limited to the value $\chi_{max}$, and thus the complexity of the method is limited to $O(N\chi_{max}^2)$ for pure states and to $O(N^2\chi_{max}^3)$ for mixed states.

The truncations made to the quantum state during execution of the method may be chosen in such a way that the fidelity between an approximated final quantum state obtained from such approximated methods and an exact final quantum state that would have been obtained from an exact method without any truncation is greater than a lower bound or equal to a lower bound. The fidelity indicates how close the approximated final quantum state is to the exact final quantum state.

Figure 2 shows a flow chart of a method 100 for determining an approximated final quantum state $|\psi_f\rangle$ in such a way that a fidelity between the approximated final quantum state $|\Psi_f\rangle$ and an exact final quantum state is greater than or equal to a lower bound.

Here, the case of a pure quantum state is considered by way of example.

At the beginning of the method 100, an initial quantum state $|\psi_i\rangle$ describing a plurality of qubits $\sigma_1, \sigma_2, \sigma_3, \sigma_4, \sigma_5$ is received 101. The initial quantum state $|\Psi_i\rangle$ is a matrix product state MPS.

Furthermore, a quantum circuit QC comprising a plurality of quantum gates to be applied to the initial quantum state $|\Psi_i\rangle$ is received 102. For the case of pure states (i.e. noiseless circuits), if all quantum gates of the quantum circuit QC were merged together, the quantum circuit QC could be represented as a unitary matrix u, and the exact final quantum state $|\psi_e\rangle$ could be determined by applying the unitary matrix u to the initial quantum state $|\psi_i\rangle$: $|\psi_e\rangle = u|\psi_i\rangle$. However, in practice the exact final quantum state is generally not determined since its determination may be too complex if the size of the studied system is too large.

In addition, a lower bound of a fidelity between the approximated final quantum state $|\Psi_f\rangle$ and an exact final quantum state is defined 103. The lower bound imposes a boundary condition on the approximations made throughout the execution of the method, i.e. the approximations are made in such a way that the fidelity is equal to or greater than the lower bound.

It is then iterated 104 over the quantum gates, in an intended order of application of the quantum gates to the initial quantum state $|\psi_i\rangle$. In each iteration, a current quantum gate $g_i$ is applied 105 to the initial quantum state $|\psi_i\rangle$. Thus, the quantum gates are applied successively to the initial quantum state $|\Psi_i\rangle$.

Single-qubit gates do not increase the bond dimension. However, two-qubit quantum gates increase the bond dimensions between the tensors to which the quantum gate is applied.

Now, one iteration out of the iterations over of the quantum gates is considered, in which a current quantum gate $g_i$ in the form of a two-qubit quantum gate is applied to the initial quantum state $|\psi_i\rangle$.

Here, the current quantum gate $g_i$ acts on the two qubits $\sigma_2, \sigma_3$, and the resulting quantum state is referred to as updated quantum state $|\psi_u\rangle$.

A portion M of the updated quantum state $|\psi_u\rangle$ resulting from the application of the current quantum gate $g_i$ to the initial quantum state $|\psi_i\rangle$ may be factorized 106 by singular value decomposition into

$$M = U\Lambda V^*$$

where U is a complex unitary matrix, $\Lambda$ a diagonal matrix having a diagonal of non-negative real numbers, and $V^t$ an adjoint complex unitary matrix.

The bond dimension $\chi_2$ corresponds to the dimension of the diagonal matrix $\Lambda$. Truncating a diagonal matrix $\Lambda$ means that the bond dimension is truncated, which may be done by canceling one or more values of the diagonal of the diagonal matrix $\Lambda$, i.e. replacing them by zero.

In the diagonal matrix $\Lambda$ generated by singular value decomposition, the diagonal elements are arranged in decreasing order, starting from the top left to the bottom right of the diagonal matrix $\Lambda$. The truncation may be done starting from the lowest value and in increasing order. Due to the cancellation of elements of the diagonal matrix $\Lambda$, rows and columns containing only zeros occur. All rows and columns containing zeros may be canceled from the truncated diagonal matrix $\Lambda_T$. Thus, the bond dimension $\chi_2$ is reduced.

The truncations may be made in such a way that the fidelity between the approximated final quantum state $|\Psi_f\rangle$ and an exact final quantum state is equal to or greater than the lower bound.

For a pure quantum state, the fidelity may be determined as:

$$F(\psi_f, \psi_e) = |<\psi_f|\psi_e>|^2$$

where $F(\psi_f, \psi_e)$ is the fidelity, $\psi_f$ is the approximated final quantum state and $\psi_e$ is the exact final quantum state.

For a mixed quantum state, the fidelity may be determined as:

$$F(\rho_f, \rho_e) = Tr(\sqrt{\sqrt{\rho_f}\rho_e\sqrt{\rho_f}})^2$$

where $F(\rho_f, \rho_e)$ is the fidelity, $\rho_e$ is the exact final quantum state and $\rho_f$ is the approximated final quantum state.

This expression is known from Richard Jozsa, "Fidelity for Mixed Quantum States", Journal of Modern Optics, Volume 41, Issue 12, 1994.

However, approximations of matrix product operators can lead to the loss of semi-definite properties of the density matrix, which is a necessary condition for determining the matrix square roots.

To solve this issue, an alternative fidelity definition is chosen for a mixed quantum state:

$$F(\rho_f, \rho_e) = \frac{|Tr(\rho_f\rho_e)|}{\sqrt{Tr(\rho_f{}^2)Tr(\rho_e{}^2)}}$$

This expression is known from Xiaoguang Wang et al., "An alternative quantum fidelity for mixed states of qudits", arXiv:0807.1781, 2008.

As mentioned, the exact final quantum states $\psi_e$ and $\rho_e$ are generally not known since there determination is too complex. Thus, it may not be possible to determined an exact value for the fidelity. Nevertheless, it is possible to determine a lower bound of the fidelity.

Therefore, random quantum circuits are considered. Random quantum circuits are a class of quantum circuits where each quantum gate is chosen randomly. Random quantum circuits generate a maximum amount of entanglement in the fewest number of quantum gates.

When applying a so-called Haar-random circuits to an initial quantum state $|\psi_i\rangle$, a Haar-random state with almost maximum entanglement entropy is generated (Page's theorem). This is known from Don N. Page, "Average Entropy of a Subsystem", Phys. Rev. Lett. 71, 1291, 1993; S. K. Foong, "Proof of Page's conjecture on the average entropy of a subsystem", Phys. Rev. Lett. 72, 1148, 1994; Jorge Sánchez-Ruiz, "Simple proof of Page's conjecture on the average entropy of a subsystem", Phys. Rev. E 52, 5653, 1995; and Siddhartha Sen, "Average Entropy of a Quantum Subsystem", Phys. Rev. Lett. 77, 1, 1996.

As it is known from Yiqing Zhou, "What limits the simulation of quantum computers? ", arXiv:2002.07730, 2020, for a random quantum circuit, the fidelity of the approximated final quantum state $|\psi_f\rangle$ obtained after an approximated simulation of a random quantum circuit is the product of the truncation fidelities $f_j$ obtained after each truncation throughout the simulation. Truncation fidelities may be determined after each truncation of a diagonal matrix and indicate how close a quantum state before truncation of the diagonal matrix is to the quantum state after truncation of the diagonal matrix. Therefore, for a simulation with a random quantum circuit, the fidelity is defined as:

$$F_{random} \approx \prod_j f_j$$

When the matrix product state MPS is in left canonical form on the left of the truncation site, and in right canonical form on the right canonical form on its right, the following relation holds for the quantum state before truncation $|\psi_{BT}\rangle$, the quantum state after truncation $|\psi_{AT}\rangle$, the elements $\Lambda_{ii}$ of the diagonal matrix before truncation and the elements $\Lambda'_{ii}$ of the diagonal matrix $\Lambda_T$ after truncation:

$$\langle \psi_{BT} | \psi_{AT} \rangle = \sum_i \Lambda_{ii}\Lambda'_{ii}$$

Since the singular values of $\Lambda_{ii}$ are always positive, the truncation fidelity $f_j$ for a truncation site j of a pure quantum state can be defined as:

$$f_j(|\psi_{BT}>,|\psi_{AT}>) = \frac{\sum_i (A_{ii}A'_{ii})^2}{\sum_i A_{ii}^2 \sum_i A'_{ii}^2}$$

For a mixed quantum state, the truncation fidelity $f_j$ is determined as:

$$f_j(\rho_{BT},\rho_{AT}) = \frac{\sum_i A_{ii}A'_{ii}}{\sqrt{\sum_i A_{ii}^2 \sum_i A'_{ii}^2}}$$

Since random quantum circuits lead to the maximum amount of entanglement, they also lead to the maximum amount of error committed when truncating a quantum state. Thus, the fidelity $F_{random}$ being a product of the truncation fidelities $\Pi_j f_j$ constitutes a lower bound for the fidelity for any approximated final quantum state $|\Psi_f>$ obtained by applying any kind of quantum circuit to an initial quantum state $|\psi_i>$.

Noise is an important parameter in quantum circuits. Noise may lead to decreased entanglement entropy. Therefore, methods that take into account noise lead to quantum states with decreased entanglement. Therefore, the error resulting from truncation is lower than the error from truncation a quantum state without noise, and the fidelity is thus higher.

Therefore, the above-determined threshold is a lower bound for an approximated final quantum state $|\Psi_f>$ resulting from the application of any noisy or noiseless quantum circuit.

For any quantum circuit applied to an initial quantum state $|\Psi_i>$ the following relation holds:

$$F(\psi_f,\psi_e) \gtrsim \prod_j f_j$$

In dependence on the specifics of the quantum circuit that is considered, the fidelity may be close to the determined lower bound, which may be the case for example if the considered quantum circuit is close to a random quantum circuit. However, if the considered quantum circuit creates little entanglement, the fidelity may be considerably larger than the lower bound.

Different strategies may be pursued when truncating the diagonal matrices $A$.

A target truncation fidelity may be defined for each two-qubit quantum gate of the quantum circuit, and thus for each diagonal matrix $A$ resulting from singular value decomposition of an updated quantum state resulting from the application of a respective current quantum gate $g_i$ to the initial quantum state $|\psi_i>$. It may then be determined 107, based on the target truncation fidelity, a target bond dimension. The diagonal matrix $A$ may then be truncated 108 to said target bond dimension.

For example, the target truncation fidelity may be defined as $f_{tar} = F_{random}^{1/N_g}$, where $F_{random}$ is the lower bound defined initially and where $N_g$ is a number of two-qubit quantum gates of the quantum circuit QC. This means that in each iteration, the target truncation fidelity is the same and the updated quantum state $|\psi_u>$.

However, it may not always be possible to truncate the diagonal matrix $A$ in such a way that the truncation fidelity is equal to the target truncation fidelity.

For example, a target truncation fidelity of $f_j = 0.95$ may be defined. Depending on the values of the diagonal elements $A_{ii}$ of the diagonal matrix $A$, it may not be possible to achieve exactly $f_j = 0.95$ by just canceling elements of the diagonal matrix $A$. If cancellation of the two smallest values leads to a truncation fidelity of $f_j = 0.96$ (which is higher than the target truncation fidelity) and truncation of the three smallest values have a truncation fidelity leads to a truncation fidelity of $f_j = 0.94$ (which is lower than the target truncation fidelity), the solution leading to a higher truncation fidelity $f_j = 0.96$ may be chosen, which is the smallest possible value for the truncation fidelity not being smaller than $f_j = 0.95$, which ensures that the maximum possible truncation in accordance with the lower bound is made.

The objective may be to achieve an actual fidelity between the approximated final quantum state $|\psi_f>$ and the exact final quantum state as close as possible to the lower bound. Thus, if in a given iteration the truncation fidelity is higher than the target truncation fidelity, the truncation fidelity in the subsequent iterations may be lower than initially planned. Therefore, the target truncation fidelity may be updated in each iteration.

The diagonal matrix $A$ can be merged 109 with the complex unitary U matrix and/or the adjoint complex unitary matrix $V^t$. This may be done with or without truncation of the diagonal matrix $A$.

The iteration over the quantum gates can be considered as a for-loop. The for-loop is executed N times, where N is the number of quantum gates in the quantum circuit QC. In the first iteration, a current quantum gate $g_i$ is applied to the

initial quantum state $|\Psi_i>$ and an updated quantum state $|\psi_u>$ is obtained. In the second iteration, the updated quantum state $|\psi_u>$ of the first iteration is used as an initial quantum state $|\psi_i>$, and a next current quantum gate $g_i$ is applied to the initial quantum state $|\Psi_i>$. In each iteration, the updated quantum state $|\Psi_u>$ of the previous iteration is used as the initial quantum state. This process is iterated until all quantum gate have been applied to the initial quantum state $|\Psi_i>$.

The updated quantum state $|\Psi_u>$ of the last iteration is defined 110 as an approximated final quantum state $|\psi_f>$.

Whatever strategy is pursued, the product of all truncation fidelities determined so far and all target truncation fidelities in relation to two-qubit quantum gates not applied yet to the initial quantum state should not be lower than the lower bound initially defined.

After the last iteration, an actual lower bound of the fidelity may be determined 111.

If all diagonal matrices $\Lambda$ were truncated according to the target truncation fidelity, the actual lower bound obtained from the product of all truncation fidelities would be equal to the lower bound defined initially. However, since the truncation fidelity may be greater than the target truncation fidelity, the actual lower bound may be greater than the lower bound defined initially. The following relation holds:

$$F\left(\psi_f, \psi_e\right) \gtrsim F_{actual} \geq F_{random}$$

where $F_{random}$ is the lower bound defined initially, $F_{actual}$ is the actual lower bound determined as the product of all truncation fidelities, and $F(\psi_f, \psi_e)$ is the fidelity between the approximated final quantum state and the exact final quantum state. $F(\psi_f, \psi_e)$ is generally not determined since its determination would be too complex.

The blocks 101, 102, 103, 104, 105, 106, 107, 108, 109, 110, 111 of the method 100 are not necessarily executed in the indicated order. For example, the reception 101 of the initial quantum state $|\Psi_i>$ may occur before, after or at the same time as the reception 102 quantum circuit QC.

The approximated final quantum state $|\Psi_f>$ and/or the actual lower bound of the fidelity may be output, for example on a computer screen and serve for further analysis.

For example, if a quantum system such as a molecule or an atom is investigated, further analysis may comprise the determination of energy states of the quantum system, based on the approximated final quantum state $|\psi_f>$.

Furthermore, based on the actual lower bound of the fidelity and on a predetermined criterion it may be decided whether the approximated final quantum state $|\Psi_f>$ is a realistic approximation of the exact final quantum state i.e. if it contains meaningful physical information of the original exact quantum state.

The predetermined criterion may comprise determining whether the actual lower bound is below or above a predefined value. The predefined value may depend on the type of quantum system (e.g. an atom, a molecule) and on the type of quantum circuit QC that is studied, for example on the number of quantum gates of the quantum circuit QC.

The method described above has numerous applications, for example in quantum computing.

In one particular example not shown in the figures, a fermionic problem may be defined. This means that the expression for a Hamiltonian to be solved is determined. Based on the problem to solve, we define a variational quantum circuit (also called an ansatz). The Hamiltonian is then minimized so as to find its ground state (e.g. the minimum energy level of the quantum system under investigation). The problem is solved via a variational quantum eigensolver (VQE), which requires many executions of the quantum circuit, i.e. many applications of the quantum circuit to an initial quantum state, which is done using the method of figure 2. At the end of this iterative process, the ground state energy of the quantum system is determined.

This ground state energy can be used further in multiple ways:

- thermodynamics stability of reactions can be probed by determining the energy difference between reactants and products;

- several properties of the quantum system can be derived from the ground state energy value, such as dipoles, polarizabilities, or interaction forces;

- excitation energies are defined relatively to the ground state. The ground state is required to study any kind of excitation energy of any atom/molecule.

Based on the determined ground state energy and/or physical properties derived from the ground state energy, a real quantum system (such as a molecule) may be prepared and/or manipulated.

Figure 3 shows a control unit 201 configured to implement the method 100 described in relation to figure 2.

The control unit 201 may comprise a memory 204 for storing instructions for implementation of at least part of the method, the data received, and temporary data for performing the various blocks and operations of the method.

The control unit 201 further comprises a control circuit 205. This control circuit can be, for example: a processor capable of interpreting instructions in the form of a computer program, or an electronic card whose blocks and operations of the method of disclosure are described in silicon, or a programmable electronic chip such as an FPGA for "Field-Programmable Gate Array", as a SOC for "System On Chip" or as an ASIC for "Application Specific Integrated Circuit".

SOCs or systems-on-chips are embedded systems that integrate all the components of an electronic system into a single chip. An ASIC is a dedicated electronic circuit that brings together custom features for a given application. The programmable logic circuits of the FPGA type are reconfigurable electronic circuits by the user of the control unit 201.

The control unit 201 comprises an input interface 202 for receiving messages or instructions, and an output interface 203 for communication with the electronic entities of the system which implements the method according to the present disclosure.

Depending on the embodiment, the control unit 201 may be a computer, a computer network, an electronic component, or another device comprising a processor 205 operatively coupled to a memory 204, and, depending on the mode of operation, selected embodiment, a data storage unit, and other associated hardware elements such as a network interface and a media reader for reading a removable storage medium 206 and writing on such a medium. The removable storage medium may be, for example, a flash disk, a USB stick, etc.

According to the embodiment, the memory 204, the data storage unit or the removable storage medium contains instructions which, when executed by the processor 205, cause this control unit 201 to performing or controlling the input interface 202, output interface 203, data storage in the memory 204 and / or data processing and method implementation examples described herein.

In addition, the instructions can be implemented in software form, in which case it takes the form of a program executable by a processor 205, or in hardware form, or "hardware", as an integrated circuit specific application ASIC, a SOC on a microchip, or in the form of a combination of hardware and software elements, for example a software program intended to be loaded and executed on an electronic component described above such as FPGA processor.

The control unit 201 can also use hybrid architectures, for example architectures based on a CPU + FPGA, or an MPPA for "Multi-Purpose Processor Array".

## Claims

1. A method (100) for determining an approximated final quantum state ($|\psi_f>$) in such a way that a fidelity between the approximated final quantum state ($|\psi_f>$) and an exact final quantum state is greater than or equal to a lower bound, the method comprising:

   - receiving (101) an initial quantum state ($|\psi_i>$) of a plurality of qubits, the initial quantum state ($|\psi_i>$) being in a matrix product representation comprising a product of tensors ($A_1,A_2,A_3,A_4,A_5$);
   - receiving (102) a quantum circuit (QC) comprising quantum gates to be applied successively to the initial quantum state ($|\psi_i>$), wherein each quantum gate among the quantum gates is a single-qubit quantum gate or a two-qubit quantum gate;
   - defining (103) a lower bound of a fidelity between the approximated final quantum state ($|\psi_f>$) and the exact final quantum state;
   - iterating (104) over the quantum gates of the quantum circuit (QC) in an intended order of application of the quantum gates to the initial quantum state ($|\psi_i>$), comprising:

     ◦ applying (105) a current quantum gate ($g_i$) of the quantum gates of the quantum circuit (QC) to the initial quantum state ($|\psi_i>$) to obtain an updated quantum state ($|\psi_u>$);
     ◦ if the current quantum gate ($g_i$) is a two-qubit quantum gate, factorizing (106) a portion (M) of the updated quantum state ($|\psi_u>$) resulting from the application of the current quantum gate ($g_i$) to the initial quantum state ($|\psi_i>$) by singular value decomposition into a product of a complex unitary matrix (U), a diagonal matrix ($\Lambda$) having a diagonal of non-negative real numbers, and an adjoint complex unitary matrix (V*);

       • truncating (108) a bond dimension ($\chi_1,\chi_2,\chi_3,\chi_4$) of the diagonal matrix ($\Lambda$) to a target bond dimension being determined (107) in such a way that a product of:

         - a truncation fidelity of the diagonal matrix ($\Lambda_T$) after truncation,
         - truncation fidelities of truncated diagonal matrices of previous iterations, wherein each of said truncated diagonal matrices of previous iterations is obtained by truncating a diagonal matrix of a previous iteration obtained by singular value decomposition of a portion of an updated quantum state of a previous iteration resulting from the application of a two-qubit quantum gate of a previous iteration to an initial quantum state of a previous iteration, and

- target truncation fidelities defined for truncation of diagonal matrices in relation to two-qubit quantum gates among the quantum gates of the quantum circuit (QC) not yet applied to the initial quantum state ($\psi_i$>),

is greater than or equal to said lower bound;

○ in a next iteration, using the updated quantum state ($|\psi_u$>) as the initial quantum state ($|\psi_i$>);

- defining (110) an approximated final quantum state ($|\psi_f$>) being equal to the updated quantum state ($|\psi_u$>) of a last iteration.

2. The method according to claim 1, wherein truncating the diagonal matrix ($\Lambda$ comprises canceling one or more diagonal elements of the diagonal matrix ($\Lambda$).

3. The method according to claim 2, wherein said one or more diagonal elements are canceled in increasing order, starting from an element with a smallest value.

4. The method according to claim 3, wherein the target bond dimension is determined (107) in such a way that

- a truncation fidelity of the diagonal matrix ($\Lambda_T$) truncated to said target bond dimension is equal to or greater than a target truncation fidelity defined for said diagonal matrix ($\Lambda$), and
- a number of diagonal elements canceled from the diagonal matrix ($\Lambda$) when truncating the bond dimension ($\chi_1$, $\chi_2, \chi_3, \chi_4$) of the diagonal matrix ($\Lambda$) to the target bond dimension is maximized.

5. The method according to claim 4, wherein the target truncation fidelity is defined as: $f_{tar} = F_{random}^{1/Ng}$, where $F_{random}$ is the lower bound and where $N_g$ is a number of two-qubit quantum gates of the quantum circuit (QC).

6. The method according claim 4, wherein:

- in a first iteration, the target truncation fidelity is defined as: $f_{tar} = F_{random}^{1/Ng}$, where $F_{random}$ is the lower bound and where $N_g$ is a number of two-qubit quantum gates of the quantum circuit (QC),
- in subsequent iterations, the target truncation fidelity is updated depending on truncation fidelities of diagonal matrices of previous iterations, or kept constant.

7. The method according to any of the previous claims, wherein, if the initial quantum state ($|\psi_i$>) and the approximated final quantum state ($|\psi_f$>) are a pure quantum states, the truncation fidelity ($f_j$) is defined as:

$$f_j = \frac{\sum_i \left(\Lambda_{ii}\Lambda'_{ii}\right)^2}{\sum_i \Lambda_{ii}^2 \sum_i \Lambda'_{ii}^2}$$

where $\Lambda_{ii}$ are elements of the diagonal matrix ($\Lambda$) before truncation and $\Lambda'_{ii}$ are elements of the diagonal matrix ($\Lambda_T$) after truncation.

8. The method according to any claims 1 - 6, wherein, if the initial quantum state ($|\psi_i$>) and the approximated final quantum state are mixed quantum states, the truncation fidelity is defined as:

$$f_j = \frac{\sum_i \Lambda_{ii}\Lambda'_{ii}}{\sqrt{\sum_i \Lambda_{ii}^2 \sum_i \Lambda'_{ii}^2}}$$

where $\Lambda_{ii}$ are elements of the diagonal matrix ($\Lambda$) before truncation and $\Lambda'_{ii}$ are elements of the diagonal matrix ($\Lambda_T$) after truncation.

9. The method according to any of the previous claims, further comprising:

- determining (111) an actual lower bound of the fidelity between the approximated final quantum state ($|\psi_f\rangle$) and an exact final quantum state defined as a product of the truncation fidelities ($f_j$).

10. The method according to claim 9, further comprising, having defined the approximated final quantum state ($|\psi_f\rangle$) and having determined the lower bound of the fidelity:

- outputting the approximated final quantum state ($|\psi_f\rangle$) and the actual lower bound of the fidelity.

11. The method according to claim 9 or claim 10, further comprising, having defined the approximated final quantum state ($|\psi_f\rangle$) and having determined the lower bound of the fidelity:

- deciding based on the actual lower bound of the fidelity and on a predetermined criterion whether the approximated final quantum state ($|\psi_f\rangle$) is a realistic approximation of the exact final quantum state.

12. A non-transitory computer readable storage medium (201), having stored thereon a computer program comprising program instructions, the computer program being loadable into a data-processing unit and adapted to cause the data-processing unit to carry out a method of any of the previous claims.

**FIG. 1**

**FIG. 3**

FIG. 2

Europäisches
Patentamt

European
Patent Office

Office européen
des brevets

# EUROPEAN SEARCH REPORT

**Application Number**

EP 23 30 5997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THOMAS AYRAL ET AL: "A density-matrix renormalisation group algorithm for simulating quantum circuits with a finite fidelity", ARXIV.ORG, CORNELL UNIVERSITY LIBRARY, 201 OLIN LIBRARY CORNELL UNIVERSITY ITHACA, NY 14853, 12 July 2022 (2022-07-12), XP091269335, * page 2 - page 16 * | 1-12 | INV. G06N10/60 |

TECHNICAL FIELDS SEARCHED (IPC)

G06N

The present search report has been drawn up for all claims

| Place of search | Date of completion of the search | Examiner |
|---|---|---|
| The Hague | 28 November 2023 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GUIFRE VIDAL**. Efficient classical simulation of slightly entangled quantum computations. *Phys. Rev. Lett.*, 2003, vol. 91, 147902
- **KYUNGJOO NOH et al.** Efficient classical simulation of noisy random quantum circuits in one dimension. *Quantum*, 2020, vol. 4, 318
- **RICHARD JOZSA**. Fidelity for Mixed Quantum States. *Journal of Modern Optics*, 1994, vol. 41 (12)
- **XIAOGUANG WANG et al.** An alternative quantum fidelity for mixed states of qudits. *arXiv:0807.1781*, 2008

- **DON N. PAGE**. Average Entropy of a Subsystem. *Phys. Rev. Lett.*, 1993, vol. 71, 1291
- **S. K. FOONG**. Proof of Page's conjecture on the average entropy of a subsystem. *Phys. Rev. Lett.*, 1994, vol. 72, 1148
- **JORGE SÁNCHEZ-RUIZ**. Simple proof of Page's conjecture on the average entropy of a subsystem. *Phys. Rev.*, 1995, vol. E 52, 5653
- **SIDDHARTHA SEN**. Average Entropy of a Quantum Subsystem. *Phys. Rev. Lett.*, 1996, vol. 77, 1
- **YIQING ZHOU**. What limits the simulation of quantum computers?. *arXiv:2002.07730*, 2020